# EUROPEAN PATENT APPLICATION

(11) **EP 2 088 793 A1**
(43) Date of publication of application: **12.08.2009**
(21) Application number: 07829918.7
(22) Date of filing: 16.10.2007
(51) Int. Cl.: H04Q 7/22, H04Q 7/36

(54) **BASE STATION AND WIRELESS COMMUNICATION SYSTEM**

(30) Priority: 01.12.2006 JP 2006325819
(71) Applicant: Mitsubishi Electric Corporation, Chiyoda-ku Tokyo 100-8310 (JP)
(72) Inventor: NAGATAKE, Eiji, Tokyo 100-8310 (JP)
(74) Representative: Pfenning, Meinig & Partner GbR
(86) International application number: PCT/JP2007/070184
(87) International publication number: WO 2008/065823

(57) **Abstract**

The present invention provides a base station that receives, when a mobile terminal for which handover is initiated enters an area covered by the base station, from a source base station a untransmitted data packet destined for the mobile terminal as an inter-base-station transfer packet. The base station includes a data receiving unit (21-2), a read control unit (22-2), and a packet transmitting unit. The data receiving unit (21-2) stores therein data packets and inter-base-station transfer packets assigned with sequence numbers. The read control unit (22-2) reads, when the data receiving unit (21-2) has inter-base-station transfer packets stored therein, all the inter-base-station transfer packets in sequence number order, and thereafter reads data packets in an order in which the data packets have been received. The packet transmitting unit transmits the inter-base-station transfer packets and the data packets read by the read control unit (22-2) to the mobile terminal for which the inter-base-station transfer packet and the data packets are destined. The read control unit (22-2) further determines whether all the inter-base-station transfer packets have been read based on the sequence numbers.

## Description

### TECHNICAL FIELD

The present invention relates to a handover for a mobile terminal to switch a base station in communication in a wireless communication system, and more particularly, to a base station and a wireless communication system capable of reducing a processing delay when performing a handover in which a user data packet that is destined for a mobile terminal in handover but not transmitted to the mobile terminal yet is transferred from a handover source to a handover destination.

### BACKGROUND ART

A conventional handover method in a wireless communication system will be described below. For example, in a wireless access network in a conventional wireless communication system, a mobile terminal communicates with a base station while moving across communication areas, what are called cells, provided by a plurality of base stations. When the mobile terminal has approached a cell boundary where it is difficult to continue communications with the base station due to degradation of wireless channel quality, handover to another base station with higher wireless channel quality is performed. As a method of preventing user data (data packets) from being lost as a result of the handover, a packet-transfer handover method has been proposed. According to the packet-transfer handover method, before handover is performed, a source base station transfers a data packet that unintentionally remain in a source base station because the data packet has failed to be transmitted to a mobile terminal to a target base station. The target base station transmits the data packet to the mobile terminal. According to this packet-transfer handover method, the target base station identifies a data packet (hereinafter, referred to as last inter-base-station transfer packet) transferred from the source base station last and transmits the last data packet to the mobile terminal. Thereafter the target base station starts transmission of data packets directly received from an upper-level node so that a transmission order of packets from the target base station to the mobile terminal is ensured. As a method for the target base station to identify the last inter-base-station transfer packet, the following method is disclosed (in, for example, Patent Document 1 below). According to this method, a source base station embeds identification data (e.g., a sequence number assigned to each of data packets) about the last inter-base-station transfer packet in a control message and sends the control message to a target base station as notification. However, this method is disadvantageous in that total processing time for handover control becomes longer by a period of time required to process the control message. To this end, a method of sending identification data of a last inter-base-station transfer packet by using a notification packet in place of the control message to a target base station has been disclosed (in, for example, Patent Document 2 below).

Patent document 1: Japanese Patent Application Laid-open No. H09-186704 Patent document 2: Published Japanese Translation of PCT International Application No. 2001-500675

### DISCLOSURE OF INVENTION

### PROBLEM TO BE SOLVED BY THE INVENTION

A base station in a wireless communication system distinguishes control data exchanged between devices for control of the devices from user data transmitted to and from a user terminal such as a mobile terminal, and handles the control data and the user data separately in different processing systems so that the various data are processed efficiently. When the base station receives a data packet, the base station determines whether the data packet is control data or user data, and allocates the data packet to one of processing systems according to the type of the data.

As described above, in the conventional packet-transfer handover method, a notification packet embedded with data for use in identification of a last inter-base-station transfer packet and notification is additionally generated and transmitted to a target base station so that the target base station can identify the last inter-base-station transfer packet. In this case, it is necessary for the target base station to determine whether the received data packet is user data or notification data (notification packet) in addition to determination as to whether the received data packet is control data or user data.

Accordingly, implementing the conventional handover method requires that the source base station additionally has functions of generating notification data, storing the data in a notification packet, and transmitting the packet, as well as that the target base station additionally has functions of identifying the notification data and processes the data separately from the user data. This can lead to upsizing of circuit of the base station and an increase in process delay, which is a problem.

The present invention has been made in view of the above circumstances and it is an object of the present invention to provide a base station and a wireless communication system capable of reducing processing delay resulting from handover. The handover is a process of transferring an untransmitted data packet destined for a mobile terminal, for which the handover is initiated, from a source base station to a target base station.

It is another object to embody the base station and the wireless communication system capable of reducing the processing delay resulting from the handover while avoiding an increase in circuit scale.

### MEANS FOR SOLVING PROBLEM

To solve the above problems and to achieve the object, a base station according to the present invention receives, when a mobile terminal that performed a handover enters an area covered by the base station, an untransmitted data packet destined for the mobile terminal from a source base station as an inter-base-station transfer packet from. The base station includes a packet storage unit that stores therein a data packet and an inter-base-station transfer packet assigned with sequence numbers; a packet reading unit that reads, when the inter-base-station transfer packet is stored in the packet storage unit, the inter-base-station transfer packet in order of the sequence number, and then reads the data packet in order of receiving the data packet; and a packet transmitting unit that transmits the inter-base-station transfer packet and the data packet read by the packet reading unit to a destination mobile terminal. The packet reading unit determines whether all inter-base-station transfer packets are read based on the sequence numbers.

### EFFECT OF THE INVENTION

According to the present invention, the target base station identifies a last inter-base-station transfer packet by comparing a sequence number assigned to a data packet directly received first from the base-station control device with sequence numbers assigned to inter-base-station transfer packets. When the last inter-base-station transfer packet is identified, it is determined that all base-station transfer packets have been transmitted to the mobile terminal, and transmission of data packets directly received from the base-station control device to the mobile terminal is started. Accordingly, because it is no longer necessary for the target base station to identify whether an inter-base-station transfer data packet is a notification packet (packet that stores therein data for identification of the last inter-base-station transfer packet), processing delay resulting from handover can be advantageously reduced while avoiding an increase in circuit scale.

### BRIEF DESCRIPTION OF DRAWINGS

[Fig. 1] Fig. 1 is a schematic diagram of a configuration example of a wireless access network that includes base stations according to the present invention.
[Fig. 2] Fig. 2 is a schematic diagram of a configuration example of a base-station control device, the base stations, and a mobile terminal that are components of the wireless access network according to a first embodiment and data transmission channels.
[Fig. 3] Fig. 3 is a schematic diagram of an internal configuration example of a data receiving unit that is a component of the base station.
[Fig. 4] Fig. 4 is a sequence chart of an example handover operation.
[Fig. 5-1] Fig. 5-1 is a schematic diagram for explaining how data packets are transmitted during handover.
[Fig. 5-2] Fig. 5-2 is a schematic diagram for explaining how data packets are transmitted during the handover.
[Fig. 5-3] Fig. 5-3 is a schematic diagram for explaining how data packets are transmitted during the handover.
[Fig. 5-4] Fig. 5-4 is a schematic diagram for explaining how data packets are transmitted during the handover.
[Fig. 5-5] Fig. 5-5 is a schematic diagram for explaining how data packets are transmitted during the handover.

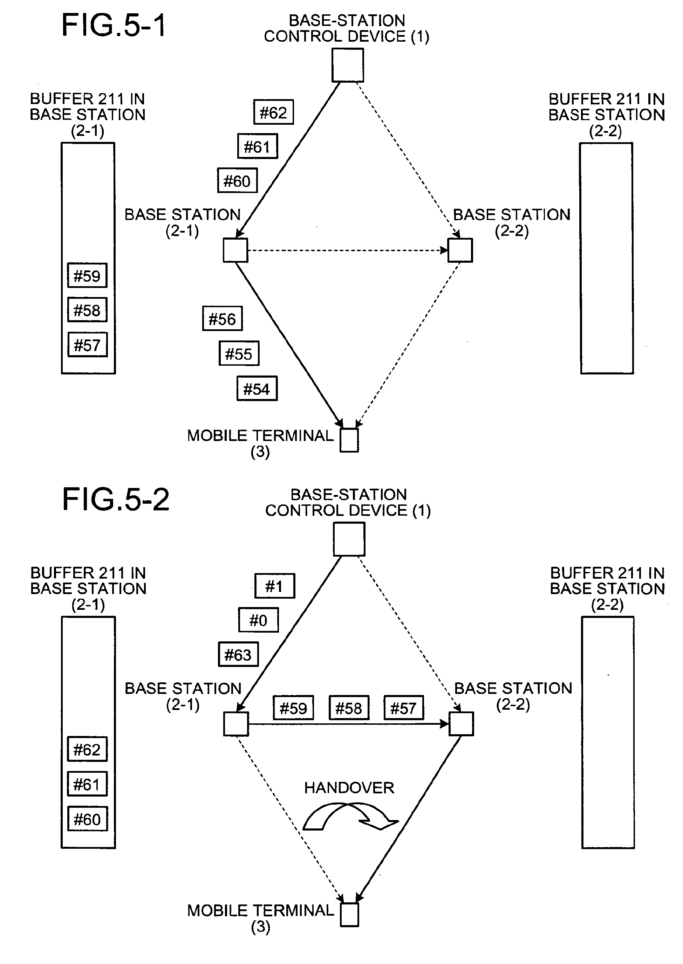

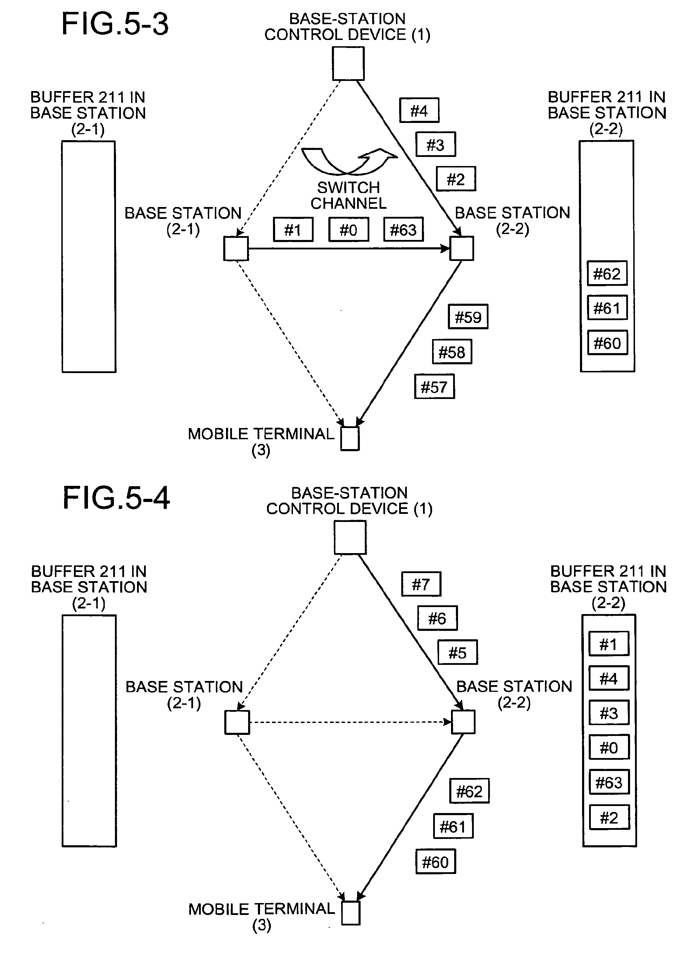

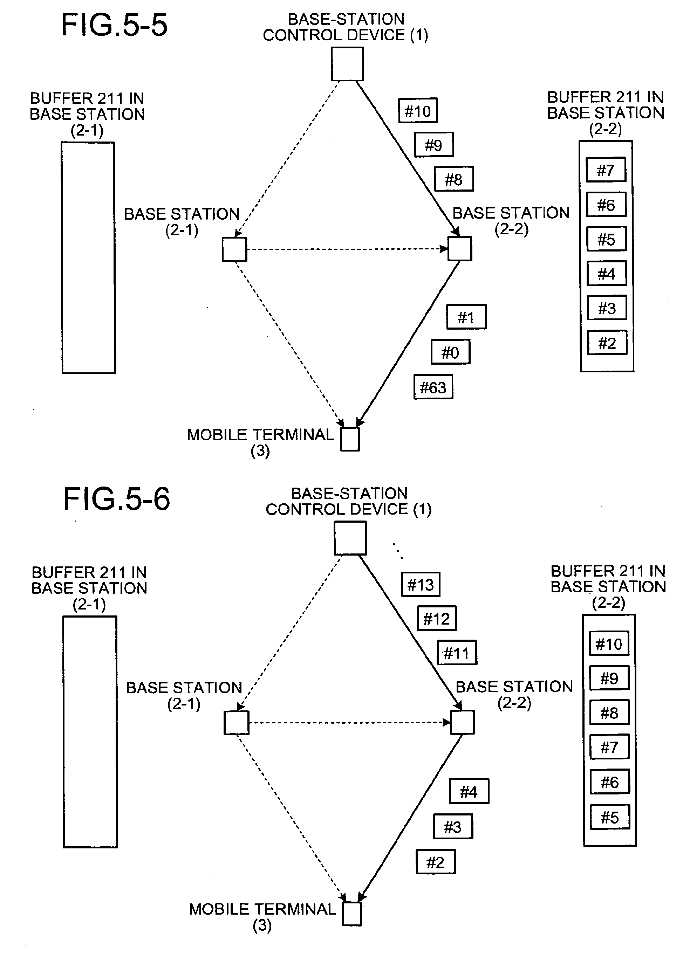

[Fig. 5-6] Fig. 5-6 is a schematic diagram for explaining how data packets are transmitted during the handover.

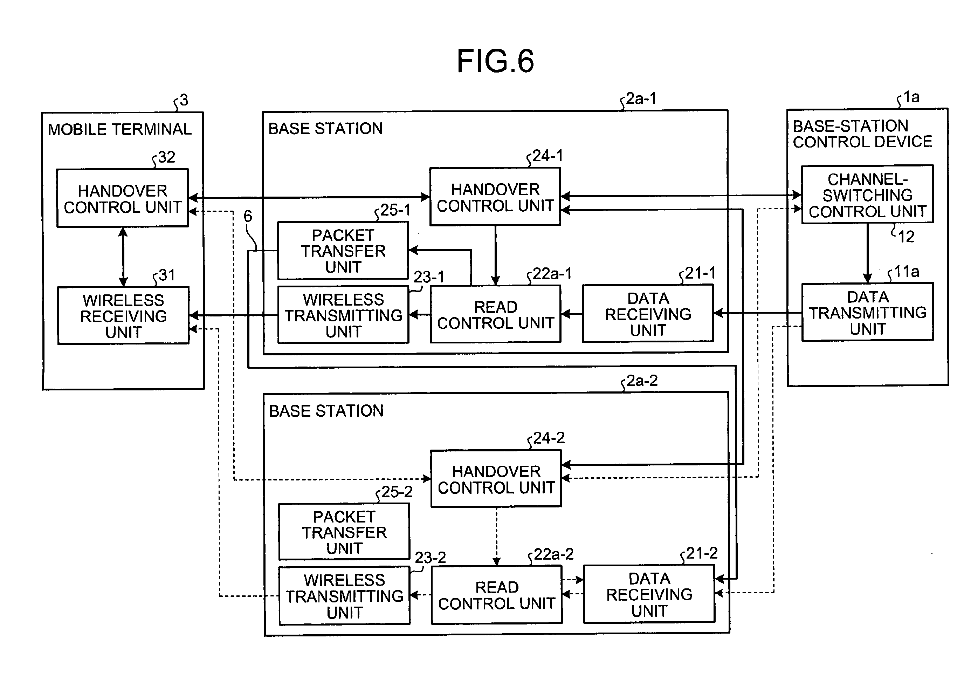

[Fig. 6] Fig. 6 is a configuration example of various devices that are components of a wireless access network of a second embodiment and data transmission channels.

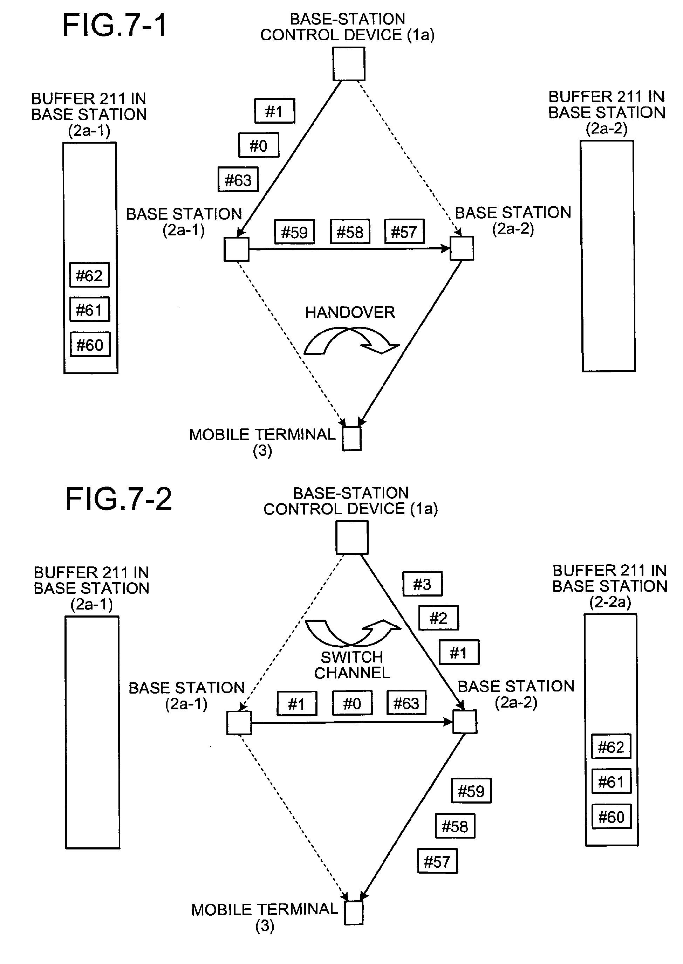

[Fig. 7-1] Fig. 7-1 is a schematic diagram for explaining how data packets are transmitted during handover in the wireless access network of the second embodiment.
[Fig. 7-2] Fig. 7-2 is a schematic diagram for explaining how data packets are transmitted during the handover in the wireless access network of the second embodiment.

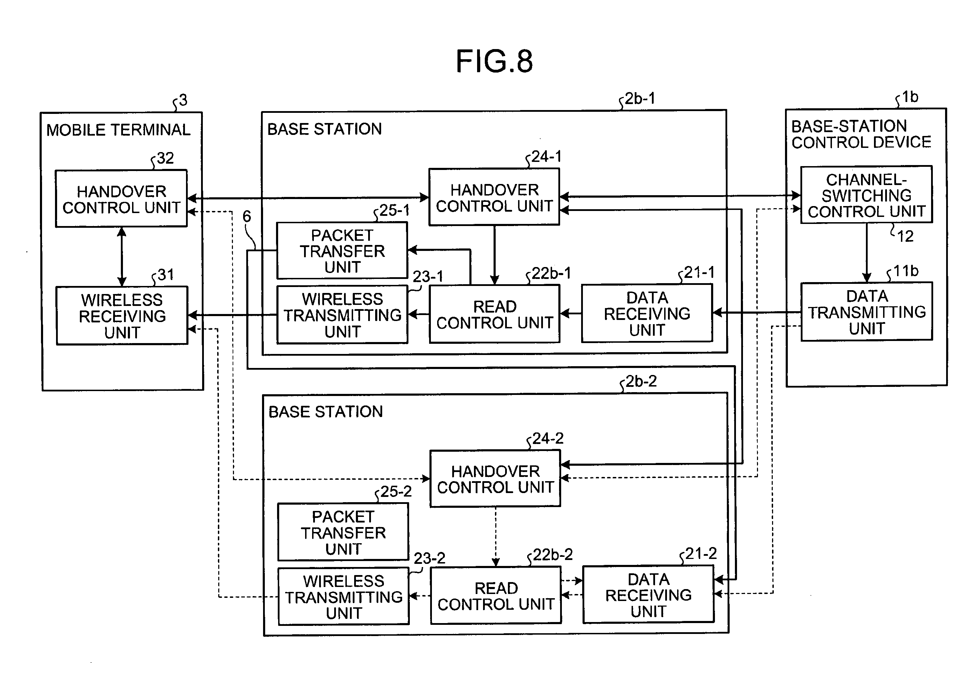

[Fig. 8] Fig. 8 is a configuration example of various devices that are components of a wireless access network of a third embodiment and data transmission channels.

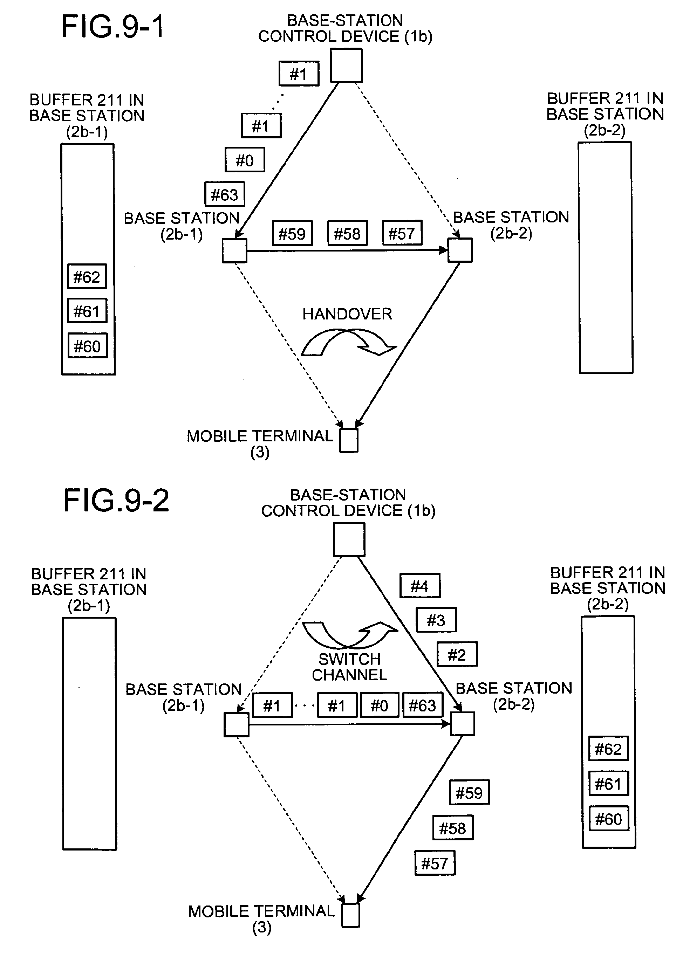

[Fig. 9-1] Fig. 9-1 is a schematic diagram for explaining how data packets are transmitted during handover in the wireless access network of the third embodiment.
[Fig. 9-2] Fig. 9-1 is a schematic diagram for explaining how data packets are transmitted during the handover in the wireless access network of the third embodiment.

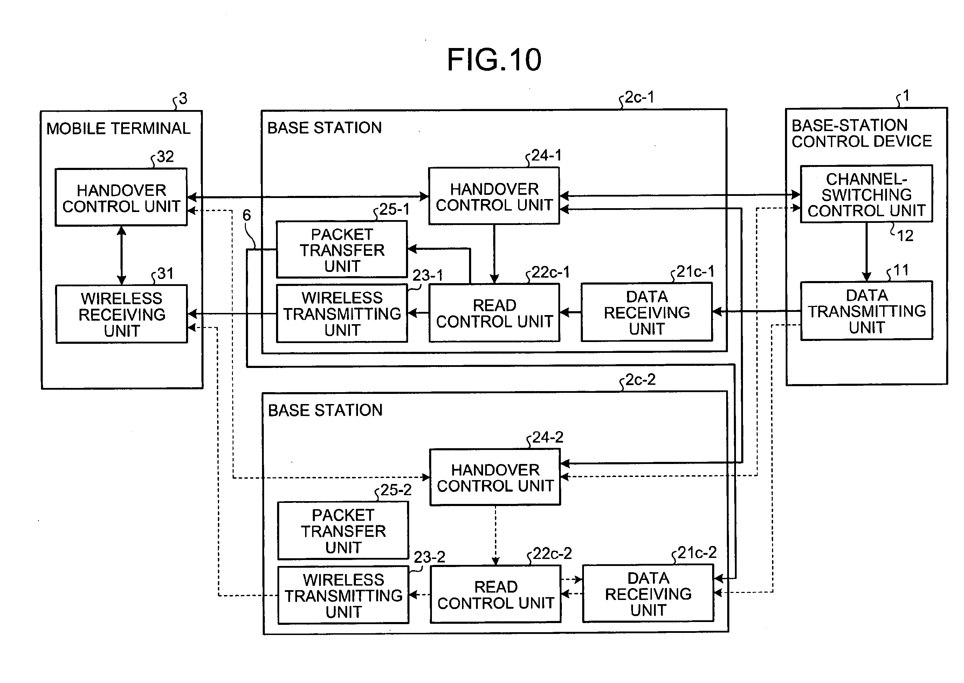

[Fig. 10] Fig. 8 is a configuration example of various devices that are components of a wireless access network of a fourth embodiment and data transmission channels.

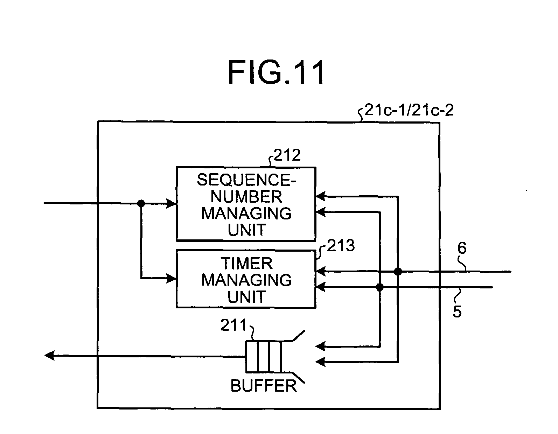

[Fig. 11] Fig. 11 is a schematic diagram of an internal configuration example of a data receiving unit that is a component of a base station of the fourth embodiment.

### EXPLANATIONS OF LETTERS OR NUMERALS

- 1, 1a, 1b: base-station control devices
- 2-1, 2-2, 2-n, 2a-1, 2a-2, 2b-1, 2b-2, 2c-1, 2c-2: base stations
- 3: mobile terminal
- 4-1, 4-2, 4-n: cells
- 5: wired transmission channel
- 6: inter-base-station transfer channel
- 11, 11a, 11b: data transmitting units
- 12: channel-switching control unit
- 21-1, 21-2, 21c-1, 21c-2: data receiving units
- 22-1, 22-2, 22a-1, 22a-2, 22b-1, 22b-2, 22c-1, 22c-2: read control units
- 23-1, 23-2: wireless transmitting units
- 24-1, 24-2: handover control units
- 25-1, 25-2: packet transfer units
- 31: wireless receiving unit
- 32: handover control unit

### BEST MODE(S) FOR CARRYING OUT THE INVENTION

Exemplary embodiments of a base station and a wireless communication system according to the present invention are described in detail below with reference to the accompanying drawings. The present invention is not limited to these exemplary embodiments.

### First embodiment.

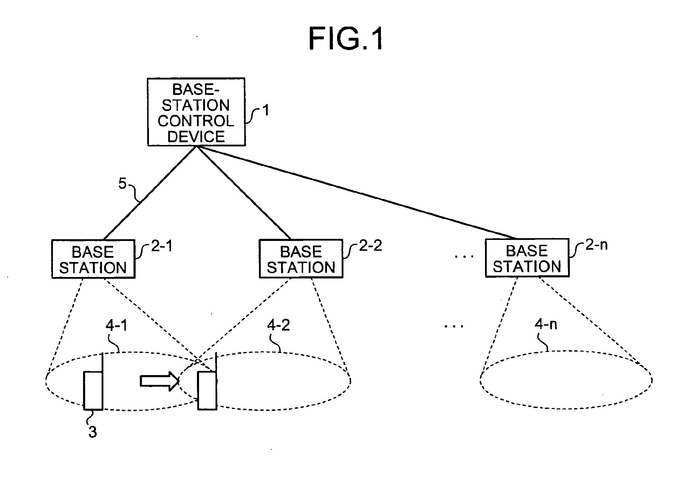

Fig. 1 is a schematic diagram of a configuration example of a wireless access network (wireless communication system) that includes the base stations according to the present invention. In Fig. 1, the wireless access network includes a base-station control device 1, base stations 2-1 to 2-n, a mobile terminal 3, cells 4-1 to 4-n, and wired transmission channels 5. The base-station control device 1 allocates data received from an upper-level network (not shown) connected to the base-station control device 1 to the base stations in the wireless access network. The base stations 2-1 to 2-n receive the data from the base-station control device 1 via the wired transmission channels and forward the data to wireless transmission channels, and determine whether it is necessary to perform handover based on wireless quality information received from the mobile terminal. The mobile terminal 3 carries out communications with the base stations 2-1 to 2-n via the wireless transmission channels. The cells 4-1 to 4-n are communication areas served by the base stations 2-1 to 2-n for communications with the mobile terminal 3 via the wireless transmission channels. The wired transmission channels 5 connect the base-station control device 1 to the base stations 2-1 to 2-n controlled by the base-station control device 1.

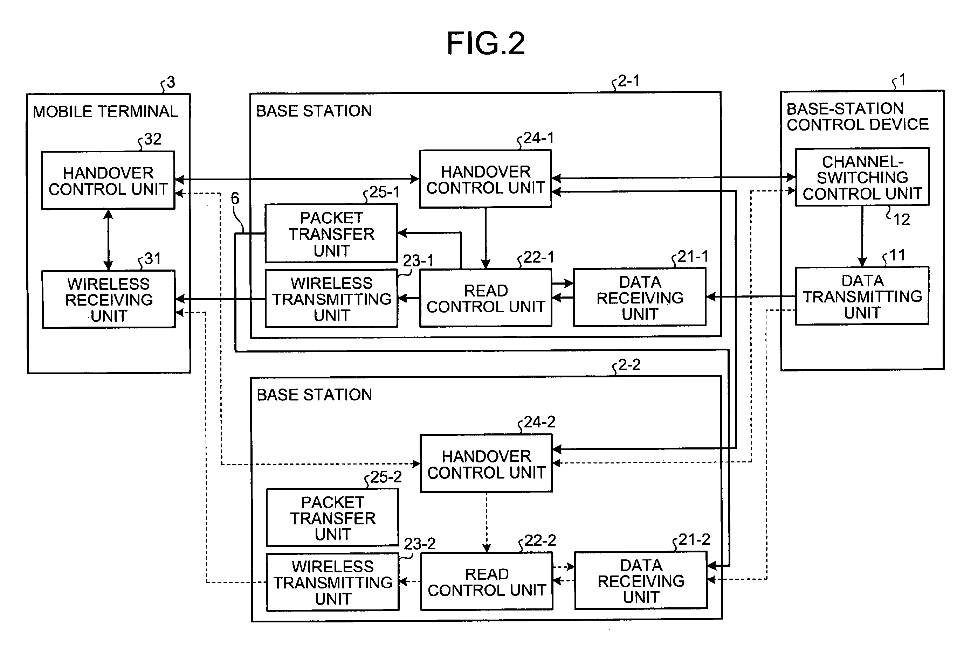

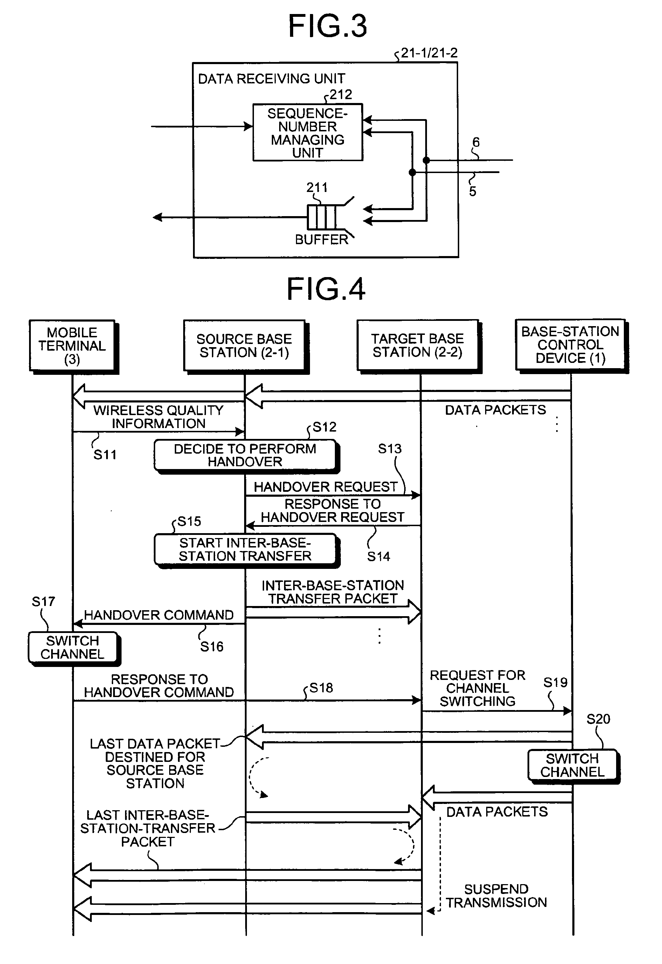

How various units operate in the wireless access network that includes the base stations according to the present invention when handover for the mobile terminal is initiated will be described with reference to Fig. 2 and Fig. 3. Handover for the mobile terminal 3 that moves from an area (cell 4-1) covered by the base station 2-1 to an area (cell 4-2) covered by the base station 2-2 in the wireless access network shown in Fig. 1 will be described below.

Fig. 2 is a schematic diagram of a configuration example of the base-station control device, the base stations, and the mobile terminal that are components of the wireless access network shown in Fig. 1 and data transmission channels. Dotted lines in the drawing indicate post-handover data transmission channels.

As shown in Fig. 2, the base-station control device 1 includes a data transmitting unit 11 and a channel-switching control unit 12. The data transmitting unit 11 receives a user data packet (hereinafter, referred to as data packet) from the network and delivers the data packet to a base station that covers an area of a mobile terminal for which the data packet is destined. The channel-switching control unit 12 controls the data transmitting unit 11 to switch a transmission channel (delivery destination) of the data packet.

Each of the base stations (base station 2-1, 2-2) includes a data receiving unit (21-1, 21-2), a read control unit (22-1, 22-2), a wireless transmitting unit (23-1, 23-2), a handover control unit (24-1, 24-2), and a packet transfer unit (25-1, 25-2). The data receiving unit (21-1, 21-2) receives a data packet transmitted from the base-station control device 1 or a data packet transferred from another base station, and stores the data packet therein. The read control unit (22-1, 22-2) reads the data packet from the data receiving unit, and allocates the data packet to any one of a transmission channel to a mobile terminal (destination mobile terminal) in the area covered by the base station and a transfer channel to another base station. The wireless transmitting unit (23-1, 23-2) receives the data packet from the read control unit and transmits the data packet to the destination mobile terminal in the area covered by the base station. The handover control unit (24-1, 24-2) determines whether handover of the mobile terminal is to be performed based on wireless quality information supplied from the mobile terminal. The packet transfer unit (25-1, 25-2) receives the data packet from the read control unit and transfers the data packet to a target base station of the destination mobile terminal. The data receiving unit corresponds to a packet storage unit. The read control unit corresponds to a packet reading unit. The wireless transmitting unit corresponds to a packet transmitting unit.

The mobile terminal 3 includes a wireless receiving unit 31 that receives a data packet transmitted from a base station and the like and a handover control unit 32 that controls handover operations.

When the data receiving unit does not have a data packet transferred from another base station (hereinafter, referred to as inter-base-station transfer packet) and stored therein, the read control unit reads data packets from the data receiving unit in an order in which the data receiving unit has received the data packets. In contrast, when the data receiving unit stores therein one or more inter-base-station transfer packets transferred from another base station, the read control unit reads the inter-base-station first and, after having read all the inter-base-station transfer packets, reads data packets directly received from the base-station control device 1.

Fig. 3 is a schematic diagram of an internal configuration example of the data receiving unit (data receiving unit 21-1, 21-2) that is a component of the base station. In Fig. 3, the data receiving unit includes a buffer 211 and a sequence-number managing unit 212. The buffer 211 temporarily stores therein received data packets (data packets directly received from the base-station control device 1 and inter-base-station transfer data packets transferred from another base station). The sequence-number managing unit 212 stores therein sequence numbers assigned to the user data together with storage locations of the received data packets in the buffer 211.

The base-station control device 1 transmits a data packet received from the upper-level network and destined for the mobile terminal 3 to the base station 2-1, among the base stations 2-1 to 2-n with which the mobile terminal 3 is communicating, via the data transmitting unit 11. The base stations 2-1 to 2-n are connected to the base-station control device 1 via the wired transmission channels 5. When another mobile terminal than the mobile terminal 3 is communicating with the base station 2-1, a data packet destined for the other mobile terminal is similarly transmitted from the base-station control device 1 to the base station 2-1. It is assumed that sequence numbers are assigned to data packets to be transmitted to the base station 2-1 in accordance with transmission order. In the following description, the sequence numbers are assigned such that sequence numbers 0 through 63 constitute one cycle.

In a base station 2-1 with which the mobile terminal 3 is communicating when handover is started, the data receiving unit 21-1 receive data packets destined for the mobile terminal 3 from the base-station control device 1 and temporarily stores the data packets in the buffer 211 in the base station 2-1. The data receiving unit 21-1 also combines storage locations of the user packets in the buffer 211 with the sequence numbers assigned to the data packets and registers them in the sequence-number managing unit 212 for management of the sequence numbers. The read control unit 22-1 refers to the information managed by the sequence-number managing unit 212 in the data receiving unit 21-1, reads data packets stored in the buffer 211 in an order of sequence numbers assigned to the data packets from the data receiving unit 21-1 (buffer 211), and transmits the data packets to the wireless transmitting unit 23-1. The wireless transmitting unit 23-1 receives the user data from the read control unit 22-1, converts the user data into signals for wireless transmission, and transmits the signals to the mobile terminal 3 in the area (in the cell 4-1) covered by the base station 2-1 via the wireless transmission channel.

The wireless receiving unit 31 receives the data transmitted wirelessly from the base station 2-1 and transmits receiving quality information (for example, information about received power level) about the received signals to the handover control unit 32. The handover control unit 32 receives the receiving quality information and calculates data that is necessary for determination as to whether handover is necessary based on the receiving quality information. For example, in the present embodiment, receiving quality information received in a predetermined period of time is averaged. Thereafter, a control message embedded with wireless quality information that contains a result of the calculation is transmitted to the base station 2-1. The control message is sent to the handover control unit 24-1 of the base station 2-1 via a wireless transmitting unit, which is not shown, of the mobile terminal 3 and a wireless receiving unit, which is not shown, of the base station 2-1. A control message from the base station 2-1 and that from the base station 2-2 are similarly sent to the base-station control device 1 via a data transmitting unit, which is not shown, in each of the base stations and a data receiving unit, which is not shown, in the base-station control device.

The handover control unit 32 also sends, as required, information about quality (for example, received power level) of a control signal received from another base station than the base station 2-1 to the base station 2-1 by embedding the information in the wireless quality information. This allows the base station 2-1 to determine a target base station when handover is initiated.

In the base station 2-1, the handover control unit 24-1 determines whether handover is necessary based on the wireless quality information embedded in the control message received from the mobile terminal 3, and sends a result of the determination to the read control unit 22-1. When it is determined that handover is necessary, the handover control unit 24-1 transmits a handover request for starting handover to the base station 2-2 which is the target base station. The handover control unit 24-1 determines a target base station based on, for example, the information about the signal received from the other base station than the base station 2-1. This information is embedded in the wireless quality information. Thereafter, when the handover control unit 24-1 receives a response message to the handover request from the base station 2-2, the handover control unit 24-1 transmits a handover command for starting handover to the mobile terminal 3.

When the read control unit 22-1 receives a result of the determination indicating that handover is not necessary, the read control unit 22-1 continues reading a data packet from the data receiving unit 21-1 and transmitting the data packet to the wireless transmitting unit 23-1. When the read control unit 22-1 receives a result indicating that handover is to be performed, the read control unit 22-1 reads a data packet (packet destined for the mobile terminal 3 for which the handover is initiated) that is the target of the handover from the data receiving unit 21-1 and transmits the data packet to the packet transfer unit 25-1. The packet transfer unit 25-1 receives the data packet from the read control unit 22-1 via an inter-base-station transfer channel 6 and transmits the data packet as an inter-base-station transfer packet to the base station 2-2, which is the target base station. When the data receiving unit 21-1 stores therein a plurality of data packets destined for the mobile terminal 3, the read control unit 22-1 continues transmission to the packet transfer unit 25-1 until all the data packets have been transmitted as inter-base-station transfer packets to the base station 2-2. The inter-base-station transfer channel 6 can be formed by directly connecting the base stations together with a wired transmission channel, or as a channel that includes the wired transmission channels 5 shown in Fig. 5 and extends via the base-station control device 1.

The data transmitting unit 11 in the base-station control device 1 continues transmitting data to the base station 2-1 until the channel-switching control unit 12 receives a channel-switching request message from the handover control unit 24-2 of the base station 2-2 which is the target base station. Upon receiving a channel-switching request message from the handover control unit 24-2, the channel-switching control unit 12 performs control operations related to a data destination (packet transmission channel) so that data packets (in this example, the data packets destined for the mobile terminal 3) destined for a user that is the target of the handover is transmitted to the base station 2-2.

In the base station 2-2, which is the target base station, when the mobile terminal 3 has moved to the cell 4-2 covered by the base station 2-2 and switching of the transmission channel is completed, notification to this effect is sent to the base-station control device 1. Thereafter, when the base-station control device 1 has completed switching of a transmission channel for data packets destined for the mobile terminal 3, the data receiving unit 21-2 receives the inter-base-station transfer packets from the source base station 2-1 and data packets directly from the base-station control device 1, and stores the received packets in the buffer 211 in the data receiving unit 21-2. Meanwhile, the storing order of the packets (the data packets directly received from the base-station control device 1 and the data packets received as the inter-base-station transfer packets) in the buffer 211 of the data receiving unit 21-2 is not necessarily the same as the order in which the data packets have been transmitted from the base-station control device 1. To prevent disruption in the sequential order of the data packets, the read control unit 22-2 operates so that the inter-base-station transfer packets are read first. More specifically, the read control unit 22-2 determines whether all the inter-base-station transfer packets have been read based on the sequence numbers assigned to the inter-base-station transfer packets and the data packets. When it is determined that all the inter-base-station transfer packets have been read, the read control unit 22-2 starts reading of data packets directly received from the base-station control device 1.

A determination method employed by the read control unit 22-2 to determine whether all the inter-base-station transfer packets have been read will be described below. The read control unit 22-2 refers to the information managed by the sequence-number managing unit 212 and compares the sequence number assigned to a data packet directly received first from the base-station control device 1 with sequence numbers assigned to the inter-base-station transfer packets. When a result of the comparison indicates that a sequence number assigned to one of the inter-base-station transfer packets immediately precedes the sequence number assigned to the data packet directly received first from the base-station control device 1, this inter-base-station transfer packet is determined as the last inter-base-station transfer packet. The read control unit 22-2 recognizes that all the inter-base-station transfer packets have been read when the inter-base-station transfer packet determined as being the last inter-base-station transfer packet has been transmitted to the wireless transmitting unit 23-2. The read control unit 22-2 starts reading of data packets directly received from the base-station control device 1.

More specifically, the base station 2-2 (target base station) transmits the inter-base-station transfer packet whose sequence number immediately precedes the sequence number of the data packet directly received first from the base-station control device 1 to the mobile terminal 3 as the last inter-base-station transfer packet. The mobile terminal 3 is the destination of the data packet assigned with the immediately preceding sequence number. Thereafter, the base station 2-2 transmits the data packets directly received from the base-station control device 1 and stored in the base station 2-2 to the mobile terminal 3 in the same order as the order in which the data packets have been transmitted from the base-station control device 1 (the order in which the data packets have been received).

A storage area in the data receiving unit 21-2 can be divided in advance by splitting an address field in the buffer 211 that stores the packets therein or by preparing physically independent memories so that the read control unit 22-2 can identify data stored in the data receiving unit 21-2 as any one of an inter-base-station transfer packet and a data packet directly received from the base-station control device 1,. Alternatively, a flag indicating a destination device can be assigned to stored data for identification as being any one of the inter-base-station transfer packet and the directly received data packet.

How data packets are transmitted during the handover will be described with reference to Fig. 4 and Figs. 5-1 to 5-6. Fig. 4 is a sequence chart of an example handover operation. Figs. 5-1 to 5-6 are schematic diagrams for explaining how data packets are transmitted during the handover. In Fig. 4, solid arrows indicate transmission of control messages for use in control of operations of various devices, while open arrows indicate transmission of user data. In Figs. 5-1 to 5-6, the solid arrows indicate currently-enabled data transmission channels while dotted arrows indicate currently-disabled data transmission channels. Switching from the solid arrows to the dotted arrows correspond to switching from prior-to-handover data transmission channels to post-handover data transmission channels.

The base-station control device 1 is exchanging user data with the mobile terminal 3 via the base station 2-1 at first. Thereafter, the mobile terminal 3 moves to the cell 4-2 covered by the base station 2-2. When the mobile terminal 3 reaches a cell boundary and wireless communication quality degrades, the mobile terminal 3 transmits wireless quality information to this effect to the base station 2-1 (Step S11). When the base station 2-1 is informed of the degradation in wireless communication quality, the handover control unit 24-1 in the base station 2-1 determines to perform handover (Step S12). The base station 2-1 stops transmission of user data to the mobile terminal 3 and sends a handover request message to the base station 2-2 (Step S13). Fig. 5-1 depicts an example of data packets having been transmitted to the base-station control device 1 up to this point in time. In this example, the base station 2-1 has transmitted data packets whose sequence numbers are equal to or smaller than #56 to the mobile terminal 3.

When it is recognized that the handover control unit 24-2 has received the handover request message, as a response thereto, the base station 2-2 returns a handover-request response message to the base station 2-1 (Step S14).

Upon receiving the handover-request response message, the handover control unit 24-1 of the base station 2-1 commands the read control unit 22-1 to start inter-base-station transfer of data packets that has not transmitted to the mobile terminal 3 yet at the point in time where implementation of the handover is determined, and starts inter-base-station transfer (Step S15). In parallel, the handover control unit 24-1 further sends a handover command message to the mobile terminal 3 (Step S16).

The read control unit 22-1 that have started inter-base-station transfer reads data packets that are destined for the mobile terminal 3 and remain in the data receiving unit 21-1, and transmits the data packets to the packet transfer unit 25-1. The packet transfer unit 25-1 transmits the data packets received from the read control unit 22-1 to the base station 2-2 as inter-base-station transfer packets.

Meanwhile, the handover control unit 32 of the mobile terminal 3 receives the handover command message and commands the wireless receiving unit 31 to switch a wireless transmission channel from that via the base station 2-1 to that via the base station 2-2 so that the wireless transmission channel is switched (Step S17). When switching of the transmission channel is completed, the handover control unit 32 sends a handover command response to the base station 2-2 as a notification to this effect (Step S18). Fig. 5-2 depicts an example of a state in which data packets of sequence numbers #57 to #59 that are not transmitted to the mobile terminal 3 yet at the point in time where the base station 2-1 determines to perform the handover are being inter-base-station transferred while the base-station control device 1 continues transmitting data packets destined for the mobile terminal 3 to the base station 2-1.

The base station 2-2 receives the inter-base-station transfer packets, and recognizes that wireless data transmission to the mobile terminal 3 is enabled when the handover control unit 24-2 receives the handover command response from the mobile terminal 3. The base station 2-2 transmits the inter-base-station transfer packets stored in the buffer 211 in the data receiving unit 21-2 to the mobile terminal 3 in the sequence number order.

After receiving the handover-command response message at Step S18, the handover control unit 24-2 in the base station 2-1 sends a channel-switching request message to the base-station control device 1 (Step S19). The channel-switching control unit 12 of the base-station control device 1 receives this channel-switching request message, and commands the data transmitting unit 11 to switch the data transmission channel from that via the base station 2-1 to that via the base station 2-2. In response thereto, the data transmitting unit 11 switches the data transmission channel (Step S20). The data packet transfer between the base station 2-1 and the base station 2-2 is repeated until a data packet destined for the mobile terminal 3 and transmitted to the base station 2-1 last has been transferred to the base station 2-2 as the last inter-base-station transfer packet. Fig. 5-3 depicts a state in which the base station 2-2 has started transmission of data packets to the mobile terminal 3 in order from the first inter-base-station transfer packet (data packet whose sequence number is #57). It is also depicted that thereafter, processing pertaining to Step S20 is completed at a point in time where the data packet, which is the last inter-base-station transfer packet and of which sequence number is #1, has been transferred, and the transmission channel is switched. It is further depicted that the base-station control device 1 starts direct transmission of data packets, the first one of which is the data packet whose sequence number is #2, to the base station 2-2.

For a certain period of time after completion of processing pertaining to Step S20 and switching of the transmission channel, both the inter-base-station transfer packets and the data packets directly received from the base-station control device 1 are stored in the data receiving unit 21-2 in the base station 2-2 in the order in which the packets have been received. The storing order of the packets depends on the processing time spent in the inter-base-station transfer of the packets, and is not necessarily the same as the order in which the base-station control device 1 has transmitted the packets (i.e., the order of the sequence numbers assigned to the data packets). An example of such a case is depicted in Fig. 5-4. In Fig. 5-4, data packets whose sequence numbers are #2, #63, #0, #3, #4, and #1 reach the base station 2-2 in this order and stored in the data receiving unit 21-2.

Under such a circumstance, the base station 2-2 suspends transmission of the data packets directly received from the base-station control device 1 until the last inter-base-station transfer packet has been transmitted to the mobile terminal 3, and transmits the inter-base-station transfer packets to the mobile terminal 3 in the sequence number order. Fig. 5-5 depicts a state in which the sequence number assigned to the data packet directly received first from the base-station control device 1 is #2, and transmission of data packets whose sequence numbers are #2 to #4 are suspended until the inter-base-station transfer packet whose sequence number is #1 has been transmitted.

The base station 2-2 recognizes that all the inter-base-station transfer packets have been read when the inter-base-station transfer packet whose sequence number immediately precedes the sequence number assigned to the data packet directly received from the base-station control device 1 has been transmitted to the mobile terminal 3. The base station 2-2 resumes the suspended transmission of the data packets directly received from the base-station control device 1 to the mobile terminal 3. Fig. 5-6 depicts a state in which the base station 2-2 receives the data packet whose sequence number is #2 and recognizes that, because the inter-base-station transfer packet whose sequence number is #1 has been transmitted, transmission of the data packets received from the base-station control device 1 is enabled. It is also depicted that the base station 2-2 starts transmission of the data packets directly received from the base-station control device 1.

As described above, the present embodiment employs the configuration in which the target base station identifies a last inter-base-station transfer packet by comparing a sequence number assigned to a data packet directly received first from the base-station control device with sequence numbers assigned to inter-base-station transfer packets. When a last inter-base-station transfer packet is identified, it is determined that all base-station transfer packets have been transmitted to the mobile terminal, and transmission of data packets, which are directly received from the base-station control device, to the mobile terminal is started. Accordingly, in contrast to the conventional handover method, the target base station is no longer required to identify whether an inter-base-station data packet is a notification packet (packet embedded with data for identification of last inter-base-station transfer packet). Hence, processing delay resulting from handover can be reduced while avoiding an increase in circuit scale.

### Second embodiment.

Subsequently, a second embodiment will be described. Fig. 6 is a configuration example of various devices that are components of a wireless access network of the second embodiment according to the present invention and data transmission channels. Dotted lines in the drawing indicate post-handover data transmission channels. Elements shown in Fig. 6 that are identical in operations with the devices or components (see Fig. 2) of the wireless access network of the first embodiment are denoted by like reference numerals and detailed description thereof will be omitted. Figs. 7-1 and 7-2 are schematic diagrams for explaining how data packets are transmitted during handover in the wireless access network according to the second embodiment.

As shown in Fig. 6, a base-station control device 1a of the second embodiment includes a data transmitting unit 11a in place of the data transmitting unit 11 of the base-station control device 11 of the first embodiment. Base stations 2a-1 and 2a-2 include read control units 22a-1 and 22a-2, respectively, in place of the read control units of the base stations 2-1 and 2-2, respectively, of the first embodiment. The mobile terminal 3 has the same configuration as that of the first embodiment.

Operations to be performed by various units when the mobile terminal performs handover in the wireless access network of the second embodiment will be described with reference to Fig. 6 and Figs. 7-1, and 7-2. As in the case of the first embodiment, the handover that is performed in the wireless access network shown in Fig. 1 for the mobile terminal 3 that moves from the area (cell 4-1) covered by the base station 2-1 to the area (cell 4-2) covered by the base station 2-2 will be described below.

In Fig. 6, the data transmitting unit 11a of the base-station control device 1a continues transmitting data to the base station 2a-1 until the channel-switching control unit 12 receives a channel-switching request message from the base station 2a-2 which is the target base station. When the base station 2a-1, which is the source base station, determines to perform the handover to the base station 2a-2 based on wireless quality information received from the mobile terminal 3, the base stations 2a-1 and 2a-2 and the mobile terminal 3 perform the handover in accordance with the procedure (see Fig. 4) described in the first embodiment. Simultaneously, the base-station control device 1a receives a channel-switching request message from the base station 2a-2, and in response thereto, the channel-switching control unit 12 switches the data transmission channel. The data transmitting unit 11a transmits the same data packet as the data packet having been transmitted to the base station 2a-1 most recently at the point in time where the data transmission channel is switched, to the base station 2a-2, which is the target base station, first.

Figs. 7-1 and 7-2 depict how data packets are transmitted during this handover. Fig. 7-1 depicts a state in which the base station 2a-1 performs inter-base-station transfer of data packets of sequence numbers #57 and subsequent numbers that are not transmitted yet to the mobile terminal 3 at the point in time where the base station 2a-1 determines to perform the handover. It is also depicted that simultaneously the base-station control device 1a continues transmitting data packets destined for the mobile terminal 3 to the base station 2a-1. Fig. 7-2 depicts a state in which the base station 2a-2 has started transmission of data packets to the mobile terminal 3 in order from the first inter-base-station transfer packet (data packet whose sequence number is #57). It is also depicted that thereafter, the transmission channel is switched at a point in time where the base station 2a-1 has transmitted the data packet which is the last inter-base-station transfer packet and of which sequence number is #1. It is further depicted that the base-station control device 1a transmits the same data packet as the data packet having been transmitted to the base station 2a-1 most recently to the base station 2a-2 (= last inter-base-station transfer packet) and thereafter directly transmits data packets whose sequence numbers are #2 and subsequent numbers to the base station 2a-2.

Meanwhile, when the base station 2a-1 determines to perform the handover and switching of the transmission channel has been performed by the base-station control device 1a, both the inter-base-station transfer packets received from the base station 2a-1 and the data packets directly received from the base-station control device 1a are stored in the data receiving unit 21-2 in the base station 2a-2 which is the target base station. The storing order of the packets depends on the processing time spent in the inter-base-station transfer of the packets, and is not necessarily the same as the order (i.e., the order of the sequence numbers assigned to the data packets) in which the base-station control device 1a has transmitted the packets. To prevent disruption in the sequential order of the data packets, the read control unit 22a-2 performs operations so that the inter-base-station transfer packets are read first. When the read control unit 22a-2 recognizes that all the inter-base-station transfer packets have been read based on the sequence numbers assigned to the data packets, the read control unit 22a-2 starts reading of data packets directly received from the base-station control device 1a.

The operations to be performed against disruption in the sequential order of the data packets in the base station 2a-2 will be described more specifically. The read control unit 22a-2 refers to the information managed by the sequence-number managing unit 212 in the data receiving unit 211-2 and compares the sequence number assigned to the data packet directly received first (i.e., the same data packet as the data packet having been transmitted to the base station 2a-1, which is the destination-source base station, most recently) from the base-station control device 1a with sequence numbers assigned to the inter-base-station transfer packets. As a result of the comparison, when a sequence number assigned to one of the inter-base-station transfer packets is found to be equal to the sequence number of the data packet directly received first, this inter-base-station transfer packet is determined as being the last inter-base-station transfer packet. The read control unit 22a-2 recognizes that all the inter-base-station transfer packets have been read when the inter-base-station transfer packet determined as being the last inter-base-station transfer packet has been transmitted to the wireless transmitting unit 23-2. The read control unit 22a-2 starts reading of data packets directly received from the base-station control device 1a. The read control unit 22a-2 discards a data packet of sequence number #1 that is directly received first from the base-station control device 1a when the read control unit 22a-2 reads this data packet from the buffer 211. The read control unit 22a-2 reads data packets whose sequence numbers are #2 and subsequent numbers in the order in which the data packets have been received from the base-station control device 1a, and sends the data packets to the wireless transmitting unit 23-2. The wireless transmitting unit 23-2 transmits the data packets received from the read control unit 22a-2 to the mobile terminal 3.

As described above, the present embodiment employs the following configuration. The target base station compares a sequence number assigned to the data packet directly received first from the base-station control device with sequence numbers assigned to inter-base-station transfer packets. When a sequence number of one of the inter-base-station transfer packets is found to be equal to the sequence number of the data packet directly received first, the target base station identifies the inter-base-station transfer packet as a last inter-base-station transfer packet. When the last inter-base-station transfer packet is identified, it is determined that all base-station transfer packets have been transmitted to the mobile terminal, and transmission of data packets, which are directly received from the base-station control device, to the mobile terminal is started. Accordingly, in contrast to the conventional handover method, the target base station is no longer required to identify whether an inter-base-station data packet is a notification packet (packet embedded with data for identification of last inter-base-station transfer packet). Hence, processing delay resulting from handover can be reduced while avoiding an increase in circuit scale.

### Third embodiment.

Subsequently, a third embodiment will be described. Fig. 8 is a configuration example of various devices that are components of a wireless access network of the third embodiment according to the present invention and data transmission channels. Dotted lines in the drawing indicate post-handover data transmission channels. Elements shown in Fig. 8 that are identical in operations with the devices or components (see Fig. 2) of the wireless access network of the first embodiment are denoted by like reference numerals and detailed description thereof will be omitted. Figs. 9-1 and 9-2 are schematic diagrams for explaining how data packets are transmitted during handover in the wireless access network according to the third embodiment.

As shown in Fig. 8, a base-station control device 1b of the second embodiment includes a data transmitting unit 11b in place of the data transmitting unit 11 of the base-station control device 11 of the first embodiment. Base stations 2b-1 and 2b-2 includes read control units 22b-1 and 22b-2, respectively, in place of the read control units of the base stations 2-1 and 2-2, respectively, of the first embodiment. The mobile terminal 3 has the same configuration as that of the first embodiment.

Operations to be performed by various units when the mobile terminal performs handover in the wireless access network of the third embodiment will be described with reference to Fig. 8 and Figs. 9-1, and 9-2. As in the case of the first embodiment, the handover that is performed in the wireless access network shown in Fig. 1 for the mobile terminal 3 that moves from the area (cell 4-1) covered by the base station 2-1 to the area (cell 4-2) covered by the base station 2-2 will be described below.

In Fig. 8, the data transmitting unit 11b of the base-station control device 1b continues data transmission to the base station 2b-1 until the channel-switching control unit 12 receives a channel-switching request message from the base station 2b-2 which is the target base station. When the base station 2b-1, which is the source base station, determines to perform the handover to the base station 2b-2 based on wireless quality information received from the mobile terminal 3, the base stations 2b-1 and 2b-2 and the mobile terminal 3 perform the handover in accordance with the procedure (see Fig. 4) described in the first embodiment. Simultaneously, in the base-station control device 1b, upon receiving a channel-switching request message from the base station 2b-2, the data transmitting unit 11b repeatedly transmits, a predetermined number of times, the data packet having been transmitted to the base station 2b-1 most recently at the point in time where the data transmission channel is switched to the base station 2b-2. When the repeated transmission is completed, the channel-switching control unit 12 switches the data transmission channel. The data transmitting unit 11b starts transmission of data packets to the base station 2b-2 which is the target base station.

Figs. 9-1 and 9-2 depict how data packets are transmitted during this handover. Fig. 9-1 depicts a state in which the base station 2b-1 performs inter-base-station transfer of data packets of sequence numbers #57 and subsequent numbers that are not transmitted yet to the mobile terminal 3 at the point in time where the base station 2b-1 determines to perform the handover. It is also depicted that simultaneously the base-station control device 1b continues transmitting data packets destined for the mobile terminal 3 to the base station 2b-1. It is further depicted that the base-station control device 1b produces a preset number of replicated packets of the data packet having been transmitted to the base station 2b-1 most recently at the point in time where the base-station control device 1b receives the channel-switching request message, and transmits (re-transmits) the replicated packets to the base station 2b-1. Fig. 9-2 depicts a state in which the base station 2b-2 has started transmission of data packets to the mobile terminal 3 in order from the first inter-base-station transfer packet (data packet whose sequence number is #57). It is also depicted that thereafter, the transmission channel is switched at a point in time where the base station 2b-1 has transmitted the data packet of which sequence number is #1, which is a last inter-base-station transfer packet. It is further depicted that the base-station control device 1b starts direct transmission of data packets, the first one of which is the data packet whose sequence number is #2, to the base station 2b-2.

Meanwhile, when the base station 2b-1 determines to perform the handover and switching of the transmission channel has been performed by the base-station control device 1b, both the inter-base-station transfer packets received from the base station 2b-1 and the data packets directly received from the base-station control device 1b are stored in the data receiving unit 21-2 in the base station 2b-2 which is the target base station. The storing order of the packets depends on the processing time spent in the inter-base-station transfer of the packets, and is not necessarily the same as the order (i.e., the order of the sequence numbers assigned to the data packets) in which the base-station control device 1b has transmitted the packets. To prevent disruption in the sequential order of the data packets, the read control unit 22b-2 performs operations so that the inter-base-station transfer packets are read first. When the read control unit 22b-2 recognizes that all the inter-base-station transfer packets have been read based on the sequence numbers assigned to the data packets, the read control unit 22b-2 starts reading of data packets directly received from the base-station control device 1b. In a case in which the data receiving unit 21-2 has a plurality of last inter-base-station transfer packets stored therein, the read control unit 22b-2 can read any one of the last inter-base-station transfer packets.

The operations to be performed against disruption in the sequential order of the data packets in the base station 2b-2 will be described more specifically. The read control unit 22b-2 refers to the information managed by the sequence-number managing unit 212 for the sequence numbers assigned to the inter-base-station transfer packets. If it is found that a plurality of inter-base-station transfer packets are assigned with a single sequence number, these packets assigned with the same sequence number are determined as being the last inter-base-station transfer packet. The read control unit 22b-2 recognizes that all the inter-base-station transfer packets have been read when all the inter-base-station transfer packets determined as being the last inter-base-station transfer packet have been transmitted to the wireless transmitting unit 23-2. The read control unit 22b-2 starts reading of data packets directly received from the base-station control device 1b. The read control unit 22b-2 discards the data packets assigned with the same sequence number (in this example, #1) as that of the last inter-base-station transfer packet when the read control unit 22a-2 reads the data packets from the buffer 211, and transmits data packets of sequence numbers other than #1 to the mobile terminal 3 in an ascending order (in order from the data packet whose sequence number is #2) of the sequence numbers.

As described above, the present embodiment employs the following configuration. The target base station repeatedly transmits an inter-base-station transfer packet having been transmitted to the source base station most recently a predetermined number of times. The read control unit in the target base station refers to sequence numbers assigned to the inter-base-station transfer packets. The sequence numbers are managed by the data receiving unit. When it is found that a plurality of inter-base-station transfer packets are assigned with a single sequence number, the inter-base-station transfer packets are identified as being a last inter-base-station transfer packet. When the last inter-base-station transfer packet is identified, it is determined that all base-station transfer packets have been transmitted to the mobile terminal, and transmission of data packets, which are directly received from the base-station control device, to the mobile terminal is started. Accordingly, in contrast to the conventional handover method, the target base station is no longer required to identify whether an inter-base-station data packet is a notification packet (packet embedded with data for identification of last inter-base-station transfer packet). Hence, processing delay resulting from handover can be reduced while avoiding an increase in circuit scale.

Furthermore, because the source base station transmits the plurality of last inter-base-station transfer packets, when to start transmission of data packets that are directly received from the base-station control device can be determined without fail even when the last inter-base-station transfer packet is lost.

### Fourth embodiment.

Subsequently, a fourth embodiment will be described. Fig. 10 is a configuration example of various devices that are components of a wireless access network of the fourth embodiment according to the present invention and data transmission channels. Dotted lines in the drawing indicate post-handover data transmission channels. Elements shown in Fig. 10 that are identical in operations with the devices or components (see Fig. 2) of the wireless access network of the first embodiment are denoted by like reference numerals and detailed description thereof will be omitted.

As shown in Fig. 10, base stations (base stations 2c-1 and 2c-2) of the fourth embodiment include data receiving units 21c-1 and 21c-2 and read control units 22c-1 and 22c-2, respectively, in place of the data receiving units 21-1 and 21-2 and the read control units 22-1 and 22-2 of the base stations 2-1 and 2-2, respectively, of the first embodiment. A base-station control device 1 and a mobile terminal 3 have the same configurations as those of the first embodiment.

Fig. 11 is a schematic diagram of an internal configuration example of the data receiving unit (data receiving unit 21c-1, 21c-2) that is a component of the base station of the fourth embodiment. The data receiving unit includes, in addition to the configuration of the data receiving unit of the first embodiment shown in Fig. 3, a timer managing unit 213. Because the data receiving unit has a similar configuration to that of the data receiving unit of the first embodiment except for the timer managing unit 213, elements are denoted by like reference numerals and descriptions thereof will be omitted. The timer managing unit 253 manages a timer such that a timer is turned on when a data packet is received first from the base-station control device 1, the timer continues counting until an inter-base-station transfer packet is received, and the timer expires after a lapse of preset period of time. Meanwhile, the timer is reset every time when an inter-base-station transfer packet is received. A period of time to be counted by the timer between the time when the timer is started and the time when the first inter-base-station transfer packet is received (or the period of time before the timer expires) and a period of time to be counted by the timer after the timer is once reset until a subsequent inter-base-station transfer packet is received are not necessarily equal to each other, and can differ from each other.

Operations to be performed by various units when the mobile terminal performs handover in the wireless access network of the fourth embodiment will be described with reference to Fig. 10 and Fig. 11. As in the case of the first embodiment, the handover that is performed in the wireless access network shown in Fig. 1 for the mobile terminal 3 that moves from the area (cell 4-1) covered by the base station 2-1 to the area (cell 4-2) covered by the base station 2-2 will be described below.

In Fig. 10, a data transmitting unit 11c of the base-station control device 1c continues transmitting data to the base station 2c-1 until the channel-switching control unit 12 receives a channel-switching request message from the base station 2c-2 which is the target base station. When the base station 2c-1, which is the source base station, determines to perform the handover to the base station 2a-2 based on wireless quality information received from the mobile terminal 3, the base stations 2c-1 and 2c-2 and the mobile terminal 3 perform the handover in accordance with the procedure (see Fig. 4) described in the first embodiment. When the base-station control device 1 has switched the data transmission channel, in the base station 2c-2, which is the target base station, the receiving unit 21c-2 receives inter-base-station transfer packets transferred from the base station 2c-1 and data packets directly transmitted from the base-station control device 1b, and stores the received packets in the buffer 211 in the data receiving unit 21c-2.

Simultaneously, in the data receiving unit 21c-2, the sequence-number managing unit 212 stores therein sequence numbers assigned to the received data packets together with storage locations of the received data packets in the buffer 211. The timer managing unit 253 causes the timer to start counting when a data packet is directly received first from the base-station control device 1. The timer continues counting until a subsequent inter-base-station transfer packet is received or a predetermined period of time elapses. When the predetermined period of time has elapsed (when the timer expires), the timer stops counting. When the subsequent inter-base-station transfer packet is received before the predetermine period of time elapses, the timer is reset. After being reset, the timer starts counting until a further subsequent inter-base-station transfer packet is received or the predetermined period of time elapses. Similar operations will be repeated until the timer expires.

Meanwhile, the storing order of the data packets in the data receiving unit 21c-2 depends on the processing time spent in the inter-base-station transfer of the data packets, and is not necessarily the same as the order (i.e., the order of the sequence numbers) in which the base-station control device 1 has transmitted the data packets. To prevent disruption in the sequential order of the data packets, the read control unit 22c-2 performs operations so that the inter-base-station transfer packets are read first. When the read control unit 22c-2 recognizes that all the inter-base-station transfer packets have been read based on the sequence numbers assigned to the data packets, the read control unit 22c-2 starts reading of data packets directly received from the base-station control device 1.

The read control unit 22c-2 refers to the information managed by the sequence-number managing unit 212 and compares the sequence number assigned to the data packet directly received first from the base-station control device 1 with the sequence numbers assigned to the inter-base-station transfer packets. As a result of the comparison, a sequence number assigned to one of the inter-base-station transfer packets is found to immediately precede the sequence number assigned to the data packet directly received first from the base-station control device 1, the inter-base-station transfer packet is determined as being the last inter-base-station transfer packet. The read control unit 22c-2 recognizes that all the inter-base-station transfer packets have been read when the inter-base-station transfer packet determined as being the last inter-base-station transfer packet has been transmitted to the wireless transmitting unit 23-2. The read control unit 22c-2 starts reading of data packets directly received from the base-station control device 1.

The read control unit 22c-2 also periodically monitors a state of the timer that is managed by the timer managing unit 253. When it is indicated as a result of the monitoring that the predetermined period of time has elapsed (the timer has expired) without receiving an inter-base-station transfer packet, the read control unit 22c-2 determines that all the inter-base-station transfer packets have been read, and operates to start transmission of data packets directly received from the base-station control device 1. By virtue of the operations, even when, for example, the last inter-base-station transfer packet is lost, making it impossible to determine when to start transmission of data packets that are directly received from the base-station control device 1, it is possible to start transmission of the data packets directly received from the base-station control device 1.

As described above, as in the case of the target base station of the first embodiment, the target base station of the present embodiment determines whether to start transmission of data packets directly received from the base-station control device to the mobile terminal based on a result of comparison between a sequence number assigned to a data packet directly received first from the base-station control device with sequence numbers assigned to inter-base-station transfer packets. Simultaneously, the target base station monitors whether an inter-base-station transfer packet has been received within a predetermined period of time after the data packet is directly received first from the base-station control device and whether, after receiving an inter-base-station transfer packet, a subsequent inter-base-station transfer packet has been received within a predetermined period of time. Even when an inter-base-station transfer packet is not received within the predetermined period of time, transmission of the data packets directly received from the base-station control device to the mobile terminal is started. Accordingly, in addition to the effect produced by the configuration of the first embodiment, the following effect is produced. Even when it is impossible to determine when to start transmission of data packets that are directly received from the base-station control device 1 due to a loss of a last inter-base-station transfer packet during a transfer or the like, it is possible to determine when to start transmission of the data packets directly received from the base-station control device 1.

Furthermore, the target base station determines when to start transmission of the data packets directly received from the base-station control device even when there is no data packet that is to be transmitted from the source base station.

The present embodiment has been described on an assumption that the data receiving unit of the base station of the first embodiment additionally includes the timer managing unit. However, the data receiving unit in the base station of the second or the third embodiment can additionally include the timer managing unit so that transmission of data packets directly received from the base-station control device is started when the timer is determined to be expired as well as based on the conditions described in the second or the third embodiment.

In the first to fourth embodiments, the operation example in which the base station determines whether it is necessary to perform the handover based on wireless quality information received from the mobile terminal. However, the present invention can be applied even to a configuration in which not the base station but the base-station control device, which is the upper-level node of the base station, has this handover determining function, and the base-station control device commands the base station to perform handover when the base-station control device determines to perform handover.

### INDUSTRIAL APPLICABILITY

As set forth hereinabove, a base station according to the present invention is suitable for wireless communications for transmission of data packets, and particularly suitable for a base station in a wireless communication system that transfers a user data packet destined for a mobile terminal, for which handover is initiated, to a target base station.

## Claims

1. A base station that receives, when a mobile terminal that performed a handover enters an area covered by the base station, an untransmitted data packet destined for the mobile terminal from a source base station as an inter-base-station transfer packet, the base station comprising:
a packet storage unit that stores therein a data packet and an inter-base-station transfer packet assigned with sequence numbers;
a packet reading unit that reads, when the inter-base-station transfer packet is stored in the packet storage unit, the inter-base-station transfer packet in order of the sequence number, and then reads the data packet in order of receiving the data packet; and
a packet transmitting unit that transmits the inter-base-station transfer packet and the data packet read by the packet reading unit to a destination mobile terminal, wherein
the packet reading unit determines whether all inter-base-station transfer packets are read based on the sequence numbers.

2. The base station according to claim 1, wherein the packet reading unit compares a sequence number assigned to a read inter-base-station transfer packet with a sequence number assigned to a data packet received first by the packet storage unit as the data packet destined for the mobile terminal, and when the sequence number assigned to the inter-base-station transfer packet precedes the sequence number assigned to the data packet by one, determines that all the inter-base-station transfer packets are read.

3. The base station according to claim 1, wherein
the packet storage unit includes a timer that starts counting time at a time at which the data packet destined for the mobile terminal is received first, resets to start counting time again at a time at which the inter-base-station transfer packet destined for the mobile terminal is received within a predetermined time, and thereafter repeats counting time every time the inter-base-station transfer packet destined for the mobile terminal is received within the predetermined time, and
the packet reading unit reads the data packet in order of receiving the data packet when a time counted by the timer reaches the predetermined time.

4. The base station according to claim 2, wherein
the packet storage unit includes a timer that starts counting time at a time at which the data packet destined for the mobile terminal is received first, resets to start counting time again at a time at which the inter-base-station transfer packet destined for the mobile terminal is received within a predetermined time, and thereafter repeats counting time every time the inter-base-station transfer packet destined for the mobile terminal is received within the predetermined time, and
the packet reading unit reads the data packet in order of receiving the data packet when a time counted by the timer reaches the predetermined time.

5. A wireless communication system including a base-station control device that delivers a data packet assigned with a sequence number to a base station that covers a mobile terminal for which the data packet is destined, and a base station that receives, when a mobile terminal that performed a handover enters an area covered by the base station, an untransmitted data packet destined for the mobile terminal from a source base station as an inter-base-station transfer packet, wherein
the base-station control device includes a data-packet transmitting unit that transmits, when transmitting the data packet destined for the mobile terminal that performed the handover, a data packet first which is same as a data packet lastly transmitted to the source base station, and thereafter transmits a data packet destined for the mobile terminal following the data packet transmitted first,
the base station includes
a packet storage unit that stores therein a data packet and an inter-base-station transfer packet,
a packet reading unit that reads, when the inter-base-station transfer packet is stored in the packet storage unit, all inter-base-station transfer packets in order of a sequence number, and then reads the data packet in order of receiving the data packet, and
a packet transmitting unit that transmits the inter-base-station transfer packet and the data packet read by the packet reading unit to a destination mobile terminal, and
the packet reading unit determines whether all inter-base-station transfer packets are read based on the sequence number.

6. The wireless communication system according to claim 5, wherein the packet reading unit compares a sequence number assigned to a read inter-base-station transfer packet with a sequence number assigned to a data packet received first by the packet storage unit as the data packet destined for the mobile terminal, and when the sequence number assigned to the inter-base-station transfer packet is same as the sequence number assigned to the data packet, determines that all the inter-base-station transfer packets are read.

7. A wireless communication system including a base-station control device that delivers a data packet assigned with a sequence number to a base station that covers a mobile terminal for which the data packet is destined, and a base station that receives, when a mobile terminal that performed a handover enters an area covered by the base station, an untransmitted data packet destined for the mobile terminal from a source base station as an inter-base-station transfer packet, wherein
the base-station control device includes a data-packet transmitting unit that retransmits, when transmitting the data packet destined for the mobile terminal that performed the handover, a data packet that is same as a data packet lastly transmitted to the source base station for a predetermined number of times, and thereafter transmits a data packet following retransmitted data packet to a target base station,
the base station includes
a packet storage unit that stores therein a data packet and an inter-base-station transfer packet,
a packet reading unit that reads, when the inter-base-station transfer packet is stored in the packet storage unit, all inter-base-station transfer packets in order of a sequence number, and then reads the data packet in order of receiving the data packet, and
a packet transmitting unit that transmits the inter-base-station transfer packet and the data packet read by the packet reading unit to a destination mobile terminal, and
the packet reading unit determines whether all inter-base-station transfer packets required to be read are read based on the sequence number.

8. The wireless communication system according to claim 7, wherein the packet reading unit checks whether the an inter-base-station transfer packet assigned with same sequence number as the sequence number assigned to the inter-base-station transfer packet read by the packet reading unit is stored in the packet storage unit, and when the inter-base-station transfer packet assigned with the same sequence number is stored in the packet storage unit, determines that all the inter-base-station transfer packets required to be read are read.

9. The wireless communication system according to claim 5, wherein
the packet storage unit includes a timer that starts counting time at a time at which the data packet destined for the mobile terminal is received first, resets to start counting time again at a time at which the inter-base-station transfer packet destined for the mobile terminal is received within a predetermined time, and thereafter repeats counting time every time the inter-base-station transfer packet destined for the mobile terminal is received within the predetermined time, and
the packet reading unit reads the data packet in order of receiving the data packet when a time counted by the timer reaches the predetermined time.

10. The wireless communication system according to claim 6, wherein
the packet storage unit includes a timer that starts counting time at a time at which the data packet destined for the mobile terminal is received first, resets to start counting time again at a time at which the inter-base-station transfer packet destined for the mobile terminal is received within a predetermined time, and thereafter repeats counting time every time the inter-base-station transfer packet destined for the mobile terminal is received within the predetermined time, and
the packet reading unit reads the data packet in order of receiving the data packet when a time counted by the timer reaches the predetermined time.

11. The wireless communication system according to claim 7, wherein
the packet storage unit includes a timer that starts counting time at a time at which the data packet destined for the mobile terminal is received first, resets to start counting time again at a time at which the inter-base-station transfer packet destined for the mobile terminal is received within a predetermined time, and thereafter repeats counting time every time the inter-base-station transfer packet destined for the mobile terminal is received within the predetermined time, and
the packet reading unit reads the data packet in order of receiving the data packet when a time counted by the timer reaches the predetermined time.

12. The wireless communication system according to claim 8, wherein
the packet storage unit includes a timer that starts counting time at a time at which the data packet destined for the mobile terminal is received first, resets to start counting time again at a time at which the inter-base-station transfer packet destined for the mobile terminal is received within a predetermined time, and thereafter repeats counting time every time the inter-base-station transfer packet destined for the mobile terminal is received within the predetermined time, and
the packet reading unit reads the data packet in order of receiving the data packet when a time counted by the timer reaches the predetermined time.
